# FASCICULE DE BREVET EUROPEEN

(11) **EP 1 649 738 B1**
(45) Date de publication et mention de la délivrance du brevet: **12.09.2007**
(21) Numéro de dépôt: 05360030.0
(22) Date de dépôt: 31.08.2005
(51) Int. Cl.: A01D 43/063

(54) **Volet mobile pour collecteur d'herbe coupée d'une tondeuse à gazon à conducteur porté**
Bewegbare Klappe für Grasfangbehälter eines Aufsitzrasenmähers
Mobile flap for mown grass collector of sit-on lawn mower

(30) Priorité: 20.10.2004 FR 0411157
(43) Date de publication de la demande: 26.04.2006
(73) Titulaire: ETESIA (Société par actions simplifiée), 67160 Wissembourg (FR)
(72) Inventeur: Gerhardt, Bruno, 67110 Niederbronn (FR); Eblin, Joseph, 67160 Wissembourg (FR); Schmitt, Freddy, 67250 Lampertsloch (FR)
(74) Mandataire: Nuss, Pierre

(56) Documents cités:
- FR-A- 2 472 334
- FR-A- 2 763 783
- US-A- 3 949 540
- US-A- 4 043 102
- US-A- 4 637 203

## Description

La présente invention concerne le domaine des tondeuses à gazon à conducteur porté (cf. FR-A-2763783) comportant un dispositif de coupe qui achemine l'herbe coupée dans un collecteur, à travers un conduit de liaison solidaire dudit collecteur et s'étendant de celui-ci jusqu'à l'arrière du dispositif de coupe, ledit collecteur étant monté de façon pivotante et de façon à pouvoir être dégagé de l'arrière de la tondeuse à gazon, pour sa vidange, et étant pourvu d'un volet mobile placé dans la zone du conduit de liaison et a pour objet un volet mobile pour collecteur d'herbe coupée d'une tondeuse à gazon à conducteur porté.

Actuellement, les tondeuses à gazon à conducteur porté, du type décrit ci-dessus, présentent généralement, dans la zone du conduit de liaison solidaire du collecteur, un volet mobile de liaison dudit conduit de liaison avec la partie arrière du dispositif de coupe, par appui sur le bord inférieur de l'orifice d'éjection d'herbe, permettant d'assurer une continuité entre la partie inférieure du conduit de liaison et l'orifice d'éjection d'herbe du dispositif de coupe, ce quel que soit le réglage de hauteur de coupe dudit dispositif de coupe.

Cependant, dans ces tondeuses connues, lors d'un démontage du collecteur, par décrochage de la partie avant de ce dernier du châssis de la tondeuse, le volet mobile équipant la zone du conduit de liaison pivote dans sa position la plus basse, à partir de laquelle il ne peut plus être positionné sur le bord inférieur de l'orifice d'éjection d'herbe. Il en résulte qu'à la remise en place du collecteur et, en particulier de sa partie avant munie du conduit de liaison, le volet ne peut être remis dans sa position de service que très difficilement, la partie avant du collecteur devant être soulevée, en vue de son accrochage, simultanément avec la partie avant du volet.

Une telle manoeuvre par un opérateur seul est très compliquée et nécessite pour le moins un temps de mise en place relativement long.

En outre, si le collecteur est du type à vidange en hauteur, lors du déplacement du collecteur en vue de la vidange, une partie de l'herbe se trouvant à l'entrée du collecteur, dans la zone du conduit de liaison, risque de tomber à travers l'ouverture de ce dernier en glissant sur le volet et, le retour en position de travail du collecteur, dans laquelle le volet est en contact avec le dispositif de coupe est quasiment impossible, l'extrémité avant du volet se trouvant dans une position trop basse pour pouvoir venir en appui sur le bord inférieur de l'orifice d'éjection d'herbe.

La présente invention a pour but de pallier ces inconvénients en proposant un volet mobile pour collecteur d'herbe coupée d'une tondeuse à gazon à conducteur porté permettant, d'une part, un montage simple et rapide du collecteur sur le châssis de la tondeuse, avec mise en place automatique du volet mobile et, d'autre part, également une mise en place automatique du volet mobile dans le cas d'utilisation du collecteur pour une vidange en hauteur.

A cet effet, le volet mobile équipant un collecteur d'herbe coupée d'une tondeuse à gazon à conducteur porté, qui est monté à pivotement dans un conduit de liaison équipant une partie avant du collecteur d'herbe coupée, est caractérisé en ce qu'il est pourvu d'un moyen d'actionnement automatique dans une position de soulèvement en direction d'une fermeture du conduit de liaison et en ce que, pour l'application de l'extrémité du volet, opposée au conduit de liaison, sur le bord inférieur de l'orifice d'éjection du dispositif de coupe, le moyen d'actionnement automatique coopère avec un dispositif de guidage à came.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue partielle en élévation latérale représentant une tondeuse à gazon à conducteur porté munie d'un collecteur d'herbe coupée pourvu d'un volet conforme à l'invention, le collecteur étant en position de réception de l'herbe coupée et le dispositif de coupe étant dans une position basse ;
la figure 1a est une vue agrandie en élévation latérale du détail A de la figure 1 ;
la figure 1b est une vue en perspective conforme à la figure 1a ;
la figure 2 est une vue analogue à celle de la figure 1, le dispositif de coupe étant en position haute ;
la figure 2a est une vue analogue à celle de la figure la du détail B de la figure 1 ;
la figure 2b est une vue en perspective conforme à la figure 2a ;
la figure 3 est une vue analogue à celle de la figure 2, dans laquelle le collecteur d'herbe coupée exécute un mouvement de pivotement en hauteur en vue de la vidange ;
la figure 4 est une vue analogue à celle de la figure 3, le collecteur étant en position haute de vidange et,
les figures 5 à 7 sont des vues partielles à plus grande échelle représentant les différentes phases de mise en position de fonctionnement du volet lors d'un accrochage de la partie avant du collecteur sur le châssis d'une tondeuse.

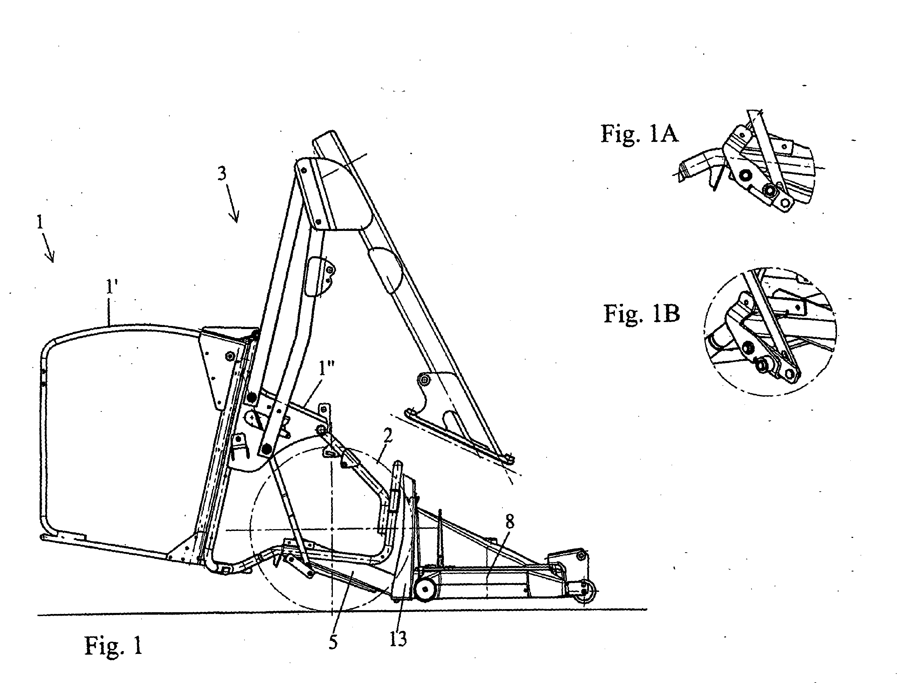

Les figures 1 à 4 des dessins annexés représentent un collecteur 1 d'herbe coupée monté sur une tondeuse à gazon à conducteur porté, représentée uniquement par une de ses roues arrière 2. Dans le mode de réalisation représenté, ce collecteur d'herbe est du type permettant une vidange en hauteur par mise en oeuvre d'un dispositif de pivotement correspondant 3 à parallélogramme.

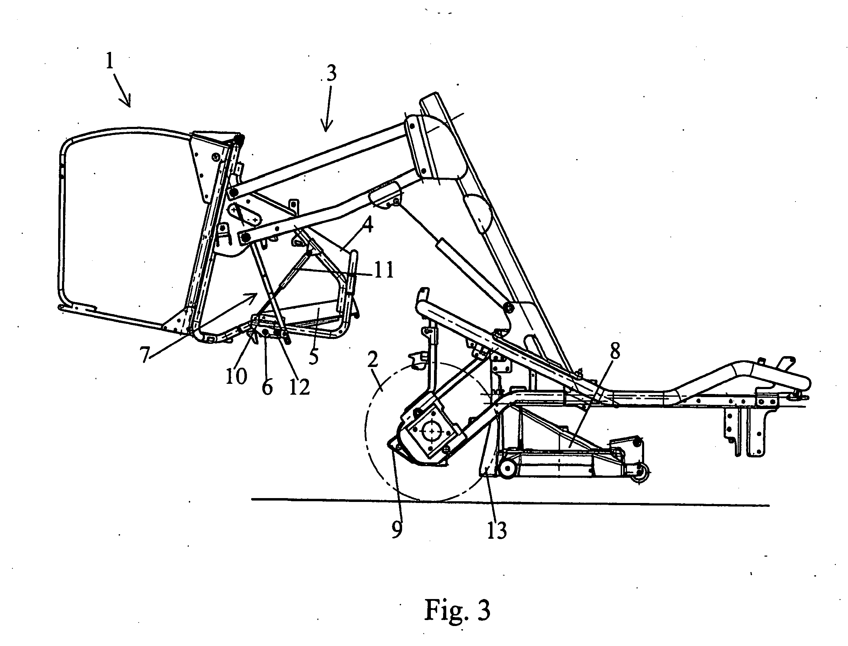

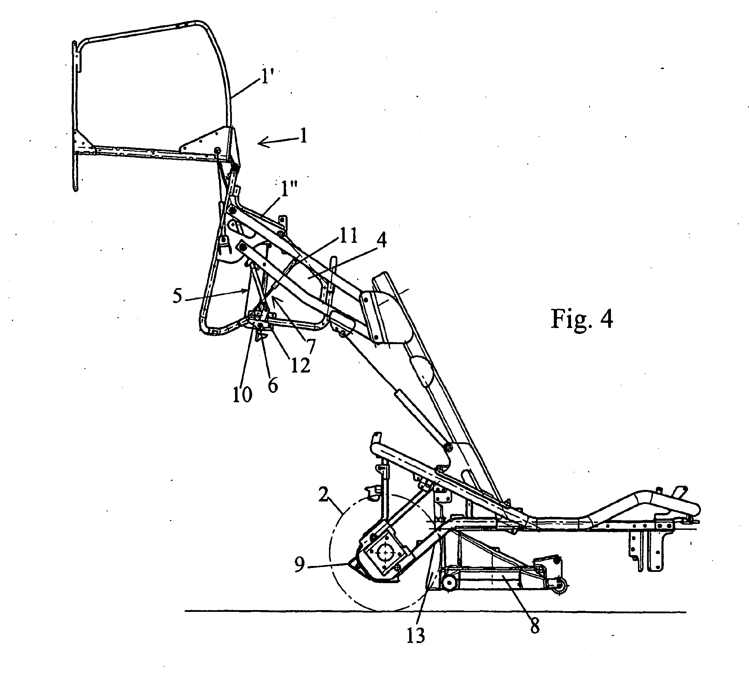

Ce collecteur 1 d'herbe coupée est essentiellement constitué par une partie arrière formant bac 1' et par une partie avant 1" s'appliquant contre la tondeuse ou accrochée à cette tondeuse, cette partie avant étant elle-même prolongée, comme le montrent les figures 3 et 4 par un conduit de liaison 4, dans lequel est monté à pivotement, au moyen d'un axe 6 de montage à pivotement, un volet mobile 5, et qui se raccorde à un dispositif de coupe ventral 8 de la tondeuse.

Conformément à l'invention, le volet mobile 5 est pourvu d'un moyen 7 d'actionnement automatique dans une position de soulèvement en direction d'une fermeture du conduit de liaison 4 et, pour l'application de l'extrémité du volet 5 opposée au conduit de liaison 4 sur le bord inférieur de l'orifice d'éjection 13 du dispositif de coupe 8, le moyen d'actionnement automatique 7 coopère avec un dispositif 9 de guidage à came.

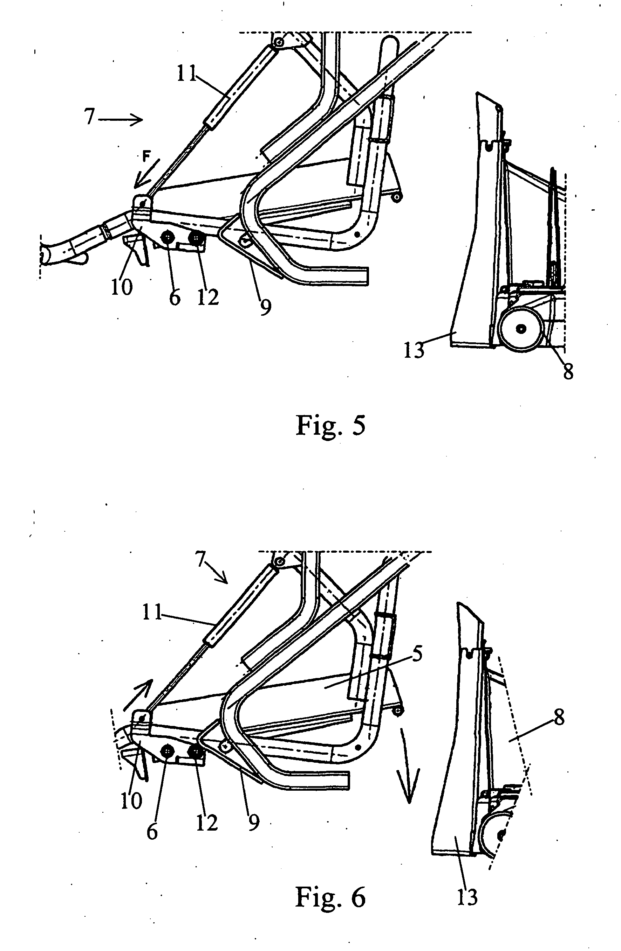

Le moyen 7 d'actionnement automatique dans une position de soulèvement en direction d'une fermeture du conduit de liaison 4 est avantageusement constitué, comme le montrent plus particulièrement les figures 5 à 7 des dessins annexés, par un levier coudé 10 monté à pivotement dans le conduit de liaison 4, par un actionneur 11 sous forme d'un vérin à gaz ou d'un dispositif de rappel à ressort, dont l'une des extrémités est reliée à la partie avant 1" du collecteur s'appuyant contre la tondeuse à gazon et dont l'autre extrémité est reliée à une extrémité du levier coudé 10 et par une broche 12 ou un ergot équipant l'autre extrémité du levier coudé 10 et s'appuyant sous le volet mobile 5 entre son extrémité d'appui sur le bord inférieur de l'orifice d'éjection 13 du dispositif de coupe 8 et son axe 6 de pivotement. L'actionneur 11, avantageusement sous forme d'un vérin à gaz ou analogue, est préférentiellement du type en extension, c'est-à-dire dont les extrémités ont tendance à être normalement dans leur position de plus grand éloignement possible. Ainsi, sous l'effet de l'actionneur 11, le levier coudé 10 est soumis à une force tendant à le faire pivoter autour de son axe en entraînant le volet mobile 5, au moyen de sa broche 12 ou un ergot, dans le sens d'un soulèvement en position de fermeture totale ou partielle du conduit de liaison 4.

Selon un mode de réalisation préférentiel de l'invention, l'axe de pivotement du levier coudé 10 est avantageusement constitué par l'axe 6 de pivotement du volet mobile 5. Ainsi, la réalisation de l'ensemble volet mobile 5 et levier coudé 10 peut être simplifiée, le levier coudé 10 étant glissé sur l'axe 6 lors du montage de l'ensemble.

Le dispositif 9 de guidage à came, coopérant avec le moyen d'actionnement automatique 7, se présente sous forme d'une rampe inclinée montée sur le châssis de la tondeuse (figures 3 à 7), cette rampe inclinée coopérant avec une roulette d'appui ou un ergot, prévu en prolongement de la broche ou ergot 12 sur le levier coudé 10, du côté opposé à ladite broche ou ergot du moyen d'actionnement 7, en position d'accrochage du collecteur 1 sur la tondeuse, en particulier dans ladite position d'accrochage et pendant le parcours final d'approche du collecteur 1 vers la tondeuse.

Comme le montrent plus particulièrement les figures 5 à 7, lors de l'approche du collecteur 1 vers sa position d'appui et/ou de fixation sur l'arrière de la tondeuse 1, le volet mobile 5 est poussé, par l'intermédiaire de l'actionneur 11 du moyen d'actionnement automatique 7, dans une position pivotée vers le haut (figure 5) par pivotement du levier coudé 10 monté sur l'axe 6 dudit volet mobile 5 et la roulette d'appui ou ergot, prévu en prolongement de la broche ou ergot 12 sur le levier coudé 10, se présente dans une position sensiblement alignée avec la partie supérieure de la rampe inclinée formant le dispositif 9 de guidage à came, qui s'étend le long d'un élément de châssis de la tondeuse 1 en direction du sol.

Conformément à une caractéristique de l'invention, le profil de la rampe inclinée formant le dispositif 9 de guidage à came est tel qu'il provoque un pivotement du levier coudé d'un angle supérieur à l'angle de pivotement du levier mobile 5 entre sa position relevée, le collecteur n'étant pas en appui contre la tondeuse, et sa position d'appui contre la tondeuse, l'extrémité libre du volet mobile 5 étant en appui sur le bord inférieur de l'orifice 13 d'éjection du dispositif de coupe 8.

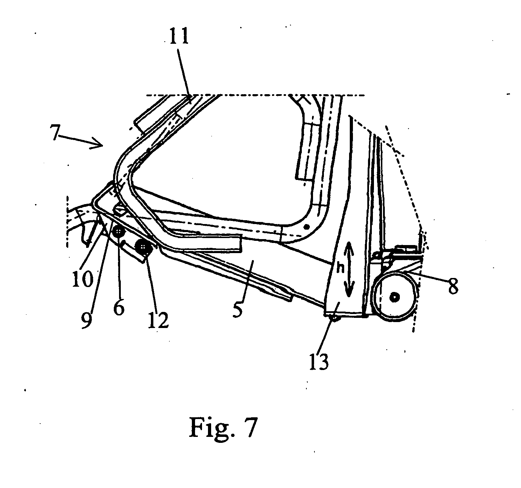

Ainsi, au cours du rapprochement du collecteur 1 vers la partie arrière de la tondeuse, pour son appui contre ladite partie arrière ou pour son accrochage sur celle-ci, la roulette d'appui ou ergot du levier coudé 10 vient en contact avec la rampe inclinée formant le dispositif 9 de guidage à came, de sorte que, dans la progression qui suit du collecteur 1, le levier coudé 10 est actionné dans un mouvement de pivotement par lequel l'actionneur 11 est comprimé et le volet mobile 5 effectue un mouvement de descente comme indiqué par la flèche de la figure 6. Ce mouvement du volet mobile 5 est rendu possible par le fait que la broche ou ergot 12 du levier coudé 10 pivote vers le bas sous l'action de la rampe inclinée formant le dispositif 9, de sorte que son appui sous ledit volet mobile 5 est annulé. Le pivotement du volet 5 est limité par l'arrivée de son extrémité libre sur le bord inférieur de l'orifice 13 d'éjection du dispositif de coupe 8. A partir de cette position, le levier coudé 10 continue de pivoter autour de l'axe 6 jusqu'à mise en contact complète de la partie avant 1" du collecteur 1 d'herbe coupée contre la tondeuse (figure 7).

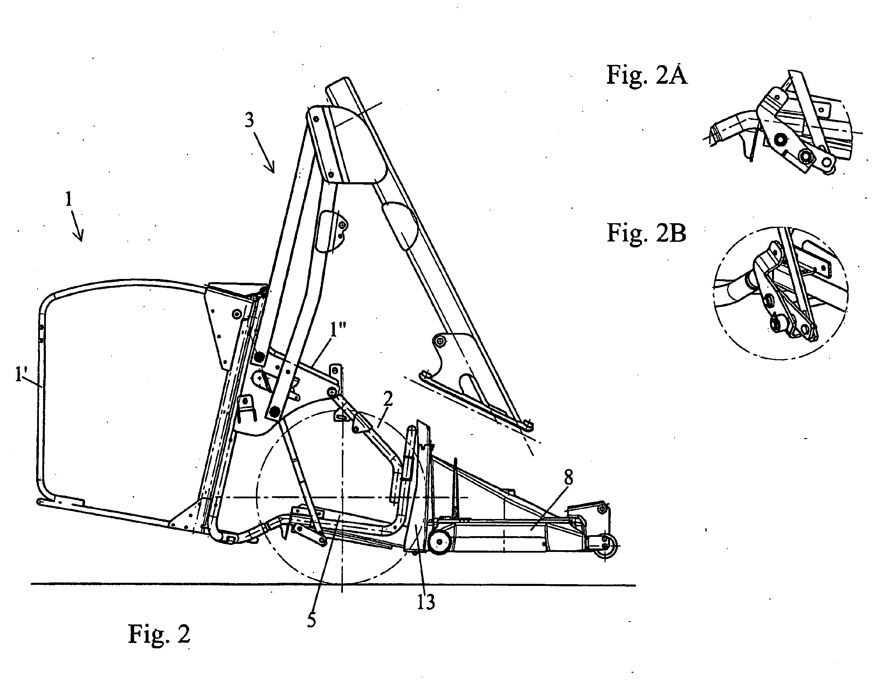

De manière connue, les dispositifs de coupe équipant les tondeuses de ce type sont réglables en hauteur. Il en résulte que le volet mobile 5 s'appuyant sur le bord inférieur de l'orifice 13 d'éjection d'herbe du dispositif de coupe 8 doit pouvoir suivre les mouvements de montée et de descente du dispositif de coupe lors du réglage de hauteur de coupe, en restant continuellement appuyé sur ledit bord inférieur de l'orifice d'éjection 13. Cette possibilité de déplacement du volet mobile 5, indépendamment du moyen d'actionnement automatique 7, est assurée grâce au montage et au mode de réalisation décrits ci-dessus du volet mobile 5 et du moyen d'actionnement automatique 7. En effet, du fait de la course supplémentaire du levier coudé 10, la broche ou ergot 12 de ce dernier n'est pas en contact avec la face inférieure du volet mobile 5, qui peut ainsi se déplacer sous le seul effet de la sollicitation du bord de l'orifice 13 d'éjection d'herbe du dispositif de coupe 8 (figures 1a, 1b, 2a et 2b).

Dans le cas d'une constitution de l'actionneur 11 sous forme d'un dispositif de rappel à ressort, le fonctionnement reste identique, le levier coudé 10 étant simplement soumis à l'une de ses extrémités à la charge d'un ressort de traction tendant à le faire pivoter dans le sens d'un entraînement du volet mobile 5 vers une position de fermeture .

Selon une variante de réalisation de l'invention, non représentée aux dessins annexés, le levier coudé 10 peut être solidarisé avec l'axe 6 de pivotement du volet mobile 5 et être muni, à son extrémité opposée à celle de liaison à l'actionneur 11, d'une roulette d'appui ou ergot venant en contact avec la rampe inclinée formant le dispositif 9 de guidage à came, l'axe 6 de montage à pivotement du volet mobile 5 dans le conduit de liaison 4 étant guidé dans un palier oblong permettant un débattement de l'axe 6 proportionnel à la variation de hauteur de réglage du dispositif de coupe 8. Dans un tel mode de réalisation, le déplacement initial du volet mobile 5 est identique à celui décrit plus haut, ledit volet 5 effectuant simplement un mouvement commandé jusqu'à son contact avec le bord de l'orifice 13 d'éjection d'herbe du dispositif de coupe 8.

Dans la poursuite du mouvement, le volet mobile 5, qui est sous la contrainte de traction de l'actionneur 11 par l'intermédiaire du levier coudé 10 et qui s'appuie par son extrémité opposée sur le bord inférieur de l'orifice 13 d'éjection d'herbe du dispositif de coupe 8, peut, lorsque le dispositif de coupe 8 est soulevé à une plus grande distance du sol pour effectuer une coupe plus haute, suivre le mouvement de montée dudit dispositif de coupe 8 en pivotant autour de la roulette d'appui ou de l'ergot coopérant avec la rampe inclinée 9, son axe de pivotement 6 se déplaçant dans son palier de guidage oblong en sens contraire, d'une valeur proportionnelle.

Grâce à l'invention, il est possible, lorsqu'un collecteur à herbe 1 est démonté d'un châssis de tondeuse à gazon porté, sur lequel il est accroché pour une vidange au sol, ou lorsqu'il est écarté de la tondeuse et amené en position de vidange en hauteur, de réaliser une mise en place aisée et rapide du volet mobile équipant un tel collecteur, du fait que ledit volet mobile est amené automatiquement dans une position pivotée vers le haut par rapport à sa position de service, tant que le collecteur n'est pas en contact avec la face d'appui correspondante de la tondeuse ou n'est pas complètement accroché sur la partie arrière de la tondeuse contre cette face.

En outre, le positionnement automatique du volet mobile dans une position tendant à fermer la zone de liaison 4 prolongeant le collecteur 1, l'herbe coupée se trouvant sur ledit volet mobile est poussée vers l'intérieur du collecteur et y est maintenue sous compression, évitant tout risque de pertes d'herbe coupée pendant la manoeuvre de soulèvement précédant la vidange.

Enfin, le positionnement automatique du volet mobile, tel que décrit ci-dessus, permet de garantir une remise en place automatique et parfaitement fiable dans le cas d'utilisation du collecteur pour une vidange en hauteur.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention comme définie par les revendications.

## Revendications

1. Volet mobile (5) équipant un collecteur (1) d'herbe coupée d'une tondeuse à gazon à conducteur porté, qui est monté à pivotement, au moyen d'un axe (6) de montage à pivotement, dans un conduit de liaison (4) équipant une partie avant du collecteur d'herbe coupée, **caractérisé en ce qu**'il est pourvu d'un moyen (7) d'actionnement automatique dans une position de soulèvement en direction d'une fermeture du conduit de liaison (4) et **en ce que**, pour l'application de l'extrémité du volet (5) opposée au conduit de liaison (4) sur le bord inférieur de l'orifice d'éjection (13) du dispositif de coupe (8), le moyen d'actionnement automatique (7) coopère avec un dispositif (9) de guidage à came.

2. Volet mobile, suivant la revendication 1, **caractérisé en ce que** le moyen (7) d'actionnement automatique dans une position de soulèvement en direction d'une fermeture du conduit de liaison (4) est constitué par un levier coudé (10) monté à pivotement dans le conduit de liaison (4), par un actionneur (11) sous forme d'un vérin à gaz ou d'un dispositif de rappel à ressort, dont l'une des extrémités est reliée à la partie avant (1") du collecteur s'appuyant contre la tondeuse à gazon et dont l'autre extrémité est reliée à une extrémité du levier coudé (10) et par une broche (12) ou un ergot équipant l'autre extrémité du levier coudé (10) et s'appuyant sous le volet mobile (5) entre son extrémité d'appui sur le bord inférieur de l'orifice d'éjection (13) du dispositif de coupe (8) et son axe (6) de pivotement.

3. Volet mobile, suivant la revendication 2, **caractérisé en ce que** l'actionneur (11), sous forme d'un vérin à gaz ou analogue, est du type en extension, c'est-à-dire dont les extrémités ont tendance à être normalement dans leur position de plus grand éloignement possible.

4. Volet mobile, suivant la revendication 2, **caractérisé en ce que** l'axe de pivotement du levier coudé (10) est constitué par l'axe (6) de pivotement du volet mobile (5).

5. Volet mobile, suivant l'une quelconque des revendications 1 et 2, **caractérisé en ce que** le dispositif (9) de guidage à came, coopérant avec le moyen d'actionnement automatique (7), se présente sous forme d'une rampe inclinée montée sur le châssis de la tondeuse, cette rampe inclinée coopérant avec une roulette d'appui ou un ergot, prévu en prolongement de la broche ou ergot (12) sur le levier coudé (10), du côté opposé à ladite broche ou ergot du moyen d'actionnement (7), en position d'accrochage du collecteur (1) sur la tondeuse, en particulier dans ladite position d'accrochage et pendant le parcours final d'approche du collecteur (1) vers la tondeuse.

6. Volet mobile, suivant l'une quelconque des revendications 1, 2 et 5, **caractérisé en ce que** le profil de la rampe inclinée formant le dispositif (9) de guidage à came est tel qu'il provoque un pivotement du levier coudé d'un angle supérieur à l'angle de pivotement du levier mobile (5) entre sa position relevée, le collecteur n'étant pas en appui contre la tondeuse, et sa position d'appui contre la tondeuse, l'extrémité libre du volet mobile (5) étant en appui sur le bord inférieur de l'orifice (13) d'éjection du dispositif de coupe (8).

7. Volet mobile, suivant la revendication 2, **caractérisé en ce que** le levier coudé (10) est solidarisé avec l'axe (6) de pivotement du volet mobile (5) et est muni, à son extrémité opposée à celle de liaison à l'actionneur (11), d'une roulette d'appui ou ergot venant en contact avec la rampe inclinée formant le dispositif (9) de guidage à came, l'axe (6) de montage à pivotement du volet mobile (5) dans le conduit de liaison (4) étant guidé dans un palier oblong permettant un débattement de l'axe (6) proportionnel à la variation de hauteur de réglage du dispositif de coupe (8).

## Claims

1. A movable shutter (5), for a cut grass collector (1) of a ride-on lawnmower, which is rotatably mounted by means of an axle (6) in a connecting conduit (4) provided in front of the cut grass collector,
**characterised in that**
the movable shutter is provided with automatic actuation means (7) for raising it into a position in the direction of closing of the connecting conduit (4) and **in that**, the automatic actuation means (7) is cooperable with a cam guide apparatus (9) for pressing the end of the shutter (5) opposite the connecting conduit (4) onto the lower edge of the discharge orifice (13) of the cutting apparatus (8).

2. A movable shutter, according to Claim 1, **characterised in that** the automatic actuation means (7) for raising it into a position in the direction of closing of the connecting conduit (4) is comprised of an angled lever (10) rotatably mounted in the connecting conduit (4), an actuator (11) in the form of a gas powered ram or of a biasing spring, one end of which is linked to a part (1") in front of the collector when pressed against the lawnmower and of which the other end is linked to an end of the angled lever (10), and a brooch (12) or pin provided at the other end of the angled lever (10) which lies under the movable shutter (5) between the end which presses against the lower edge of the discharge orifice (13) of the cutting apparatus (8) and its axle (6).

3. A movable shutter, according to Claim 2, **characterised in that** the actuator (11), is in the form of a gas powered ram or similar, and is of the extension type, that is to say, of which its ends have the tendency to be normally in their fully extended position.

4. A movable shutter, according to Claim 2, **characterised in that** the axle which rotatably mounts the angled lever (10) is comprised of the axle (6) which rotatably mounts the movable shutter (5).

5. A movable shutter, according to any of Claims 1 and 2, **characterised in that** the cam guide apparatus (9), cooperable with the automatic actuation means (7), is presented in the form of an inclined ramp mounted on the chassis of the lawnmower, said inclined ramp for cooperating with a supporting caster or a pin provided in the direction of the brooch or pin (12), on the angled lever (10) on the side of the actuation means (7) opposite the said brooch or pin, in a position for the collision of the collector (1) onto the lawnmower, in particular in the said collision position and during the final approach route of the collector (1) towards the lawnmower.

6. A movable shutter, according to any of Claims 1, 2 and 5, **characterised in that** the profile of the inclined ramp forming the cam guide apparatus (9) is that which promotes a pivoting of the angled lever by a larger angle than the angle of pivoting of the movable shutter (5) between its raised position, with the collector not being in contact against the lawnmower, and its position in contact with the lawnmower with the free end of the mobile shutter (5) being in contact with the lower edge of the discharge orifice (13) of the cutting apparatus (8).

7. A movable shutter, according to Claim 2, **characterised in that** the angled lever (10) is integral with the axle (6), by which the movable shutter is rotatable, and is provided, at its end opposite to the end linked with the actuator (11), with a caster or a pin contactable with the inclined ramp forming the cam guide apparatus (9), the mounting axle (6), by which the movable shutter is rotatable in the connecting conduit (4), being guidable in an oblong opening permitting a clearance of the axle (6) proportional to the variation of the adjustable height of the cutting apparatus (8).

## Patentansprüche

1. Bewegliche Klappe (5) als Ausstattungsteil eines Grasfangbehälters eines Aufsitzrasenmähers, die schwenkbar mittels einer Schwenkmontageachse (6) in einem Verbindungstunnel (4) angeordnet ist, der in einem vorderen Teil des Grasfangbehälters vorgesehen ist,
**dadurch gekennzeichnet,**
**dass** sie mit einem automatischen Betätigungsmittel (7) zum Verschließen des Verbindungstunnels (4) in einer Anhebestellung versehen ist und dass das automatische Betätigungsmittel (7) zum Anlegen des Endes der Klappe (5), das von dem Verbindungstunnel (4) abgewandt ist, an den unteren Rand der Auswurföffnung (13) der Schneidvorrichtung (8) mit einer Nockenführungsvorrichtung (9) zusammenwirkt.

2. Bewegliche Klappe nach Anspruch 1,
**dadurch gekennzeichnet,**
**dass** das automatische Betätigungsmittel (7) zum Verschließen des Verbindungstunnels (4) in einer Anhebestellung gebildet ist durch einen Kniehebel (10), der schwenkbar in dem Verbindungstunnel (4) angelenkt ist, durch einen Aktuator (11) in Form eines Gasdruckzylinders oder einer Federrückstellvorrichtung, dessen eines Ende mit dem vorderen Teil (1 ") des Fangbehälters verbunden ist, der sich an dem Rasenmäher abstützt, und dessen anderes Ende mit einem Ende des Kniehebels (10) verbunden ist, und durch einen Stift (12) oder einen Zapfen, der am anderen Ende des Kniehebels (10) vorgesehen ist und der unterhalb der mobilen Klappe (5) zwischen deren Anlageende am unteren Rand der Auswurföffnung (13) der Schneidvorrichtung (8) und deren Schwenkachse (6) anliegt.

3. Bewegliche Klappe nach Anspruch 2,
**dadurch gekennzeichnet,**
**dass** der Aktuator (11), der als Gasdruckzylinder oder dergleichen ausgebildet ist, vom Expansionstyp ist, das heißt, dass seine Enden die Tendenz haben, normalerweise ihre Stellung größtmöglichen Abstands voneinander einzunehmen.

4. Bewegliche Klappe nach Anspruch 2,
**dadurch gekennzeichnet,**
**dass** die Schwenkachse des Kniehebels (10) durch die Schwenkachse (6) der beweglichen Klappe (5) gebildet ist.

5. Bewegliche Klappe nach einem der Ansprüche 1 und 2,
**dadurch gekennzeichnet,**
**dass** die Nockenführungsvorrichtung (9), die mit dem automatischen Betätigungsmittel (7) zusammenwirkt, in Form einer geneigten Rampe ausgebildet ist, die an dem Chassis des Mähers angebracht ist, wobei die geneigte Rampe mit einer Auflagerrolle oder einem Zapfen zusammenwirkt, die bzw. der in Verlängerung des Stifts oder Zapfens (12) auf dem Kniehebel (10) auf der gegenüberliegenden Seite bezüglich des Stifts oder Zapfens des Betätigungsmittels (7) in Einhakstellung des Fangbehälters (1) an dem Mäher vorgesehen ist, insbesondere in der Einhakstellung und während der Annäherungsendbewegung des Fangbehälters (1) an den Mäher.

6. Bewegliche Klappe nach einem der Ansprüche 1, 2 und 5,
**dadurch gekennzeichnet,**
**dass** das Profil der geneigten Rampe, welche die Nockenführungsvorrichtung (9) bildet, derart ausgestaltet ist, dass es ein Schwenken des Kniehebels um einen Winkel bewirkt, der größer ist als der Schwenkwinkel des beweglichen Hebels (5) zwischen seiner angehobenen Stellung, wobei der Fangbehälter nicht in Anlage an dem Mäher ist, und seiner Anlagestellung an dem Mäher, wobei das freie Ende der beweglichen Klappe (5) in Anlage an dem unteren Rand der Auswurföffnung (13) der Schneidvorrichtung (8) ist.

7. Bewegliche Klappe nach Anspruch 2,
**dadurch gekennzeichnet,**
**dass** die Kniehebel (10) mit der Schwenkachse (6) der beweglichen Klappe (5) verbunden ist und an seinem Ende, das demjenigen der Verbindung mit dem Aktuator (11) gegenüberliegt, eine Auflagerrolle oder einen Zapfen aufweist, die bzw. der mit der geneigten Rampe in Kontakt tritt, welche die Nockenführungsvorrichtung (9) bildet, wobei die Schwenkmontageachse (6) der beweglichen Klappe (5) in dem Verbindungstunnel (4) in einem länglichen Lager geführt ist, das ein Verschieben der Achse (6) proportional zu der Änderung der Höhenregelung der Schneidvorrichtung (8) ermöglicht.
